(19) Europäisches Patentamt
European Patent Office
Office européen des brevets

(11) Numéro de publication: **0 325 102 A1**

# (12) DEMANDE DE BREVET EUROPEEN

(21) Numéro de dépôt: **89100085.3**

(51) Int. Cl.4: **H01M 2/16**

(22) Date de dépôt: **04.01.89**

(30) Priorité: **07.01.88 FR 8800098**

(43) Date de publication de la demande:
**26.07.89 Bulletin 89/30**

(84) Etats contractants désignés:
**AT BE CH DE ES FR GB GR IT LI LU NL SE**

(71) Demandeur: **Société Anonyme dite SAFT**
**156, avenue de Metz**
**F-93230 Romainville(FR)**

(72) Inventeur: **Atkin, John**
**3 rue Benjamin Franklin**
**F-33160 Saint Médard en Jalles(FR)**

(74) Mandataire: **Weinmiller, Jürgen et al**
**Lennéstrasse 9 Postfach 24**
**D-8133 Feldafing(DE)**

## (54) Procédé de fabrication d'un séparateur pour accumulateur alcalin et séparateur obtenu.

(57) Procédé de fabrication d'un séparateur pour accumulateur alcalin à base de fibres de polyoléfine ou de polyamide, caractérisé par le fait que l'on part de fibres élémentaires que l'on effectue sur certaines de ces fibres un traitement de greffage et que l'on réalise ensuite un séparateur non tissé avec des fibres traitées et des fibres non traitées, ou traitées differemment.

EP 0 325 102 A1

Xerox Copy Centre

## Procédé de fabrication d'un séparateur pour accumulateur alcalin et séparateur obtenu

La présente invention concerne un séparateur pour accumulateur alcalin.

Actuellement on utilise plusieurs types de séparateurs pour cette application.

Dans les accumulateurs alcalins ouverts, on utilise des séparateurs microporeux en polychlorure de vinyle ou en polyoléfine.

Dans les accumulateurs alcalins étanches ou ouverts on peut mettre en oeuvre également des séparateurs constitués de fibres en polyoléfine ou en polyamide tissées ou sous forme de feutre non tissé.

Le problème technique qui se pose est le maintien de la résistance chimique du séparateur en un milieu fortement alcalin de normalité allant de 7 à 8N, à une température élevée pouvant aller jusqu'à 85 °C, en présence d'oxygène sous pression ; en effet dans le cas des accumulateurs étanches, cette pression d'oxygène peut atteindre plusieurs dizaines de bars.

On constate que ce sont les séparateurs à base de fibres de polyoléfine qui sont les plus résistants chimiquement ; mais pour renforcer encore cette résistance on leur fait subir un traitement chimique destiné à leur greffer un élément de type acrylique, méthacrylique ou acrylonitrile. Des exemples de traitements de greffage sont décrits dans les brevets GB-A-1 451 892, GB-A-1 588 625. Ces traitement sont très onéreux.

La présente invention a pour but de mettre en oeuvre un procédé moins coûteux pour réaliser un séparateur susceptible de résoudre le problème technique précité et présentant des caractéristiques encore améliorées.

La présente invention a pour objet un procédé de fabrication d'un séparateur pour accumulateur alcalin à base de fibres de polyoléfine ou de polyamide, caractérisé par le fait que l'on part de fibres élémentaires, que l'on effectue sur certaines de ces fibres un traitement de greffage, et que l'on réalise ensuite un séparateur non tissé avec des fibres traitées et des fibres non traitées ou traitées différemment.

Selon un premier mode de réalisation, on met en oeuvre un traitement de greffage unique sur des fibres élémentaires de nature différentes.

Selon un second mode de réalisation on met en oeuvre plusieurs traitements de greffage respectivement sur des ensembles de fibres de même nature, ou de natures différentes

Selon l'invention, toute combinaison de fibres greffées ou non est donc possible.

La présente invention a pour objet un séparateur pour accumulateur alcalin comportant une matrice de fibres de polyamide ou de polyoléfine, caractérisé par le fait que ladite matrice comporte au moins un ensemble de fibres ayant subi un traitement de greffage et un ensemble de fibres non traitées.

La présente invention a également pour objet un séparateur pour accumulateur alcalin comportant une matrice de fibres de polyamide ou de polyoléfine, caractérisé par le fait que ladite matrice est constituée de fibres de même matière, ayant subi des types de greffage différents.

La présente invention a également pour objet un séparateur pour accumulateur alcalin comportant une matrice de fibres de polyamide ou de polyoléfine, caractérisé par le fait que ladite matrice comporte des fibres de matières différentes, ayant subi des types de greffage différents.

D'autres caractéristiques et avantages de l'invention apparaitront au cours de la description suivante d'un mode de réalisation donné à titre illustratif mais nullement limitatif.

On irradie trois kilogrammes de fibres de polyéthylène haute densité en présence d'air pendant 24 heures par une source au Cobalt $Co_{60}$ .

Ces fibres, dont la longueur est de l'ordre de 5 millimètres, ont un diamètre de l'ordre de 15 microns, mais pouvant être compris entre 50 microns et 0,5 micron. La densité de ces fibres est de 0,95g/cm3, mais le traitement selon l'invention est également applicable aux fibres de basse densité (0,92g/cm3) ou aux fibres de polyméthylène (0,98g/cm3). La source au cobalt $Co_{60}$ est la source de radioactivité industrielle. Ses caractéristiques sont décrites dans l'ouvrage "Hand Book of Chemistry and Physics 52nd Edn- 1971 - The Rubber Chemical Co".

On part de chaînes :

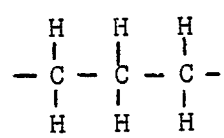

Globalement l'irradiation correspond à 2,5 MRad et provoque la formation de peroxydes et d'hydroperoxydes. On obtient par exemple des chaînes du type :

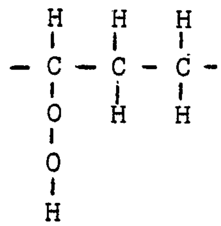

Les fibres irradiées sont ensuite plongées dans une solution aqueuse d'acide acrylique de concentration 25% en eau, maintenue à 95° C afin de décomposer les peroxydes et les hydroperoxydes et de produire des radicaux de greffage de type -C-O. : les chaînes précitées deviennent :

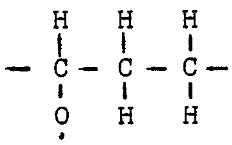

puis :

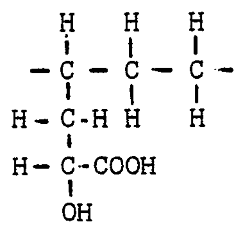

A la solution d'acide acrylique on peut ajouter un sel de fer, tel que le sulfate ferreux ou sel de Mohr, afin de diminuer la formation de gels polyacryliques. Le pourcentage de cet ajout est de 1,5 % environ.

Après le greffage, les fibres sont lavées à l'eau, séchées et ensuite incorporées au milieu d'autres fibres non greffées pour réaliser un séparateur non tissé.

Le séparateur selon l'invention présente de nombreux avantages vis-à-vis des séparateurs globalement greffés après leur fabrication.

Ces derniers ne peuvent pas comporter de produits susceptibles d'être dégradés lors de l'irradiation par la source au Cobalt. Ils ne peuvent pas comporter non plus de liants susceptibles d'être décomposés ou détériorés dans la solution de greffage à 95° C. Leur lavage et leur séchage en fin de traitement sont des opérations délicates.

Par contre, un séparateur selon l'invention peut comporter des fibres de polypropylène mélangées à des fibres greffées, ces fibres de polypropylène étant mécaniquement résistantes mais sensibles à l'irradiation. De même un séparateur selon l'invention peut comporter un pourcentage important (pouvant être de l'ordre de 50 %) de fibres non traitées, hydrophobes, et destinées à réduire la migration du cadmium à haute température, dans les accumulateurs nickel-cadmium.

Bien entendu l'invention n'est pas limitée au mode de fabrication qui vient d'être décrit. On peut mélanger dans un même séparateur des fibres de natures différentes ayant subi le même traitement de greffage; on peut utiliser des fibres de polytétrafluoroéthylène greffé à l'acide acrylique. Mais on peut également utiliser d'autres organes de greffage et mettre en oeuvre par exemple un acrylamide ou un méthacrylamide.

## Revendications

1/ Procédé de fabrication d'un séparateur pour accumulateur alcalin à base de fibres de polyoléfine ou de polyamide, caractérisé par le fait que l'on part de fibres élémentaires que l'on effectue sur certaines de ces fibres un traitement de greffage et que l'on réalise ensuite un séparateur non tissé avec des fibres traitées et des fibres non traitées ou traitées différemment.

2/ Procédé de fabrication selon la revendication 1, caractérisé par le fait que l'on met en oeuvre un traitement de greffage unique sur des fibres élémentaires de nature différentes.

3/ Procédé de fabrication selon la revendication 1, caractérisé par le fait que l'on met en oeuvre plusieurs traitements de greffage respectivement sur des ensembles de fibres de même nature ou de natures différentes.

4/ Séparateur pour accumulateur alcalin comportant une matrice de fibres de polyamide ou de polyoléfine, caractérisé par le fait que ladite matrice comporte au moins un ensemble de fibres ayant subi un traitement de greffage et un ensemble de fibres non traitées.

5/ Séparateur pour accumulateur alcalin comportant une matrice de fibres de polyamide ou de polyoléfine, caractérisé par le fait que ladite matrice est constituée de fibres de même matière, ayant subi des types de greffage différents.

6/ Séparateur pour accumulateur alcalin comportant une matrice de fibres de polyamide ou de polyoléfine, caractérisé par le fait que ladite matrice comporte des fibres de matières différentes, ayant subi des types de greffage différents.

Office européen des brevets

# RAPPORT DE RECHERCHE EUROPEENNE

Numero de la demande

EP 89 10 0085

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 290 207 (E.E. MAGAT et al.)<br>* Revendication 1, exemple 2; colonne 12, lignes 56-60; colonne 18, lignes 31-53; colonne 19, lignes 24-28 *<br>--- | 1,4 | H 01 M 2/16 |
| Y | GB-A- 891 944 (E.I. DU PONT DE NEMOURS)<br>* Revendications 1,2,5-7,10-13,20; page 3, lignes 95-115; page 4, ligne 5 - page 5, ligne 8; page 6, lignes 68-74; page 10, lignes 90-127; page 11, lignes 23-30,53-57; exemple 2; page 2, lignes 36-38 *<br>--- | 1,4 | |
| Y | GB-A- 891 945 (E.I. DU PONT DE NEMOURS)<br>* Revendications 1-7,12,22,23; page 4, ligne 109 - page 5, ligne 42; page 5, lignes 102-105; exemple 26; page 13, ligne 116 - page 14, ligne 11; exemple 28 *<br>--- | 1,4 | **DOMAINES TECHNIQUES RECHERCHES (Int. Cl.4)** |
| X<br>Y | US-A-3 376 168 (C. HOROWITZ)<br>* Colonne 2, lignes 34-42 *<br>--- | 5<br>1,4 | H 01 M<br>D 04 H<br>D 06 M |
| D,Y | FR-A-2 200 055 (SECRETARY OF DEFENCE OF U.K.)<br>* Revendications 1,4,5,7; page 2, lignes 3-31; exemple 1 *<br>--- | 1,4 | |
| A | EP-A-0 035 949 (DOLLFUS & NOACK)<br>* Revendications 1,2,7; page 4, lignes 1-33; page 5, lignes 15-20; page 8, ligne 17 - page 9, ligne 18 *<br>--- -/- | 1,3,5 | |

Le présent rapport a été établi pour toutes les revendications

| Lieu de la recherche | Date d'achèvement de la recherche | Examinateur |
|---|---|---|
| LA HAYE | 14-04-1989 | D'HONDT J.W. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

Office européen des brevets

# RAPPORT DE RECHERCHE EUROPEENNE

Numero de la demande

EP 89 10 0085

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 221 645 (YARDNEY CORP.)<br>* Revendications 1-3,5,8 * | 5,6 | |
| X | FR-A-2 288 808 (W.R. GRACE & CO.)<br>* Revendications 1,5,10; page 1, lignes 22-23; page 5, lignes 20-24 * | 5 | |
| A | FR-A-1 233 697 (POLYPLASTIC)<br>* Page 2, colonne de gauche, dernier paragraphe - colonne de droite, paragraphe 4; page 3, colonne de droite, paragraphes 1-4; exemples 2,12 * | 1,3,5 | |
| A | BE-A- 623 166 (YARDNEY INT. CORP.)<br>* Revendication 1; page 2, lignes 13-23; page 6, paragraphe 1; page 16, paragraphe 2; page 17, paragraphe 2; page 19, paragraphe 3 * | 1,5 | |
| A | EP-A-0 246 862 (W.R. GRACE & CO.)<br>* Revendications 1,7,13 * | 1,4 | DOMAINES TECHNIQUES RECHERCHES (Int. Cl.4) |
| A | CHEMICAL ABSTRACTS, vol. 92, no. 4, janvier 1980, page 205, résumé no. 25594j, Columbus, Ohio, US; & JP-A-79 131 727 (H. KANAI) 13-10-79<br>* Résumé * | 6 | |
| A | PATENT ABSTRACTS OF JAPAN, vol. 4, no. 133 (E-26)[615], 18 septembre 1980, page 165 E 26; & JP-A-55 88 263 (NIPPON GENSHIRYOKU KENKYUSHO) 03-07-1980<br>* Résumé * | | |

-/-

Le présent rapport a été établi pour toutes les revendications

| Lieu de la recherche | Date d'achèvement de la recherche | Examinateur |
|---|---|---|
| LA HAYE | 14-04-1989 | D'HONDT J.W. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

Office européen des brevets

# RAPPORT DE RECHERCHE EUROPEENNE

Numero de la demande

EP 89 10 0085

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN, vol. 4, no. 175 (E-36)[657], 3 décembre 1980; & JP-A-55 122 361 (NIPPON GENSHIRYOKU KENKYUSHO) 20-09-1980 * Résumé * | | |
| A | US-A-3 709 738 (T.J. WETHERELL) | | |
| A | US-A-4 206 275 (P. BERNSTEIN et al.) | | |
| | | | DOMAINES TECHNIQUES RECHERCHES (Int. Cl.4) |

Le présent rapport a été établi pour toutes les revendications

| Lieu de la recherche | Date d'achèvement de la recherche | Examinateur |
|---|---|---|
| LA HAYE | 14-04-1989 | D'HONDT J.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)